# FASCICULE DE BREVET EUROPEEN

(11) **EP 2 470 942 B1**
(45) Date de publication et mention de la délivrance du brevet: **20.08.2014**
(21) Numéro de dépôt: 09740721.7
(22) Date de dépôt: 26.08.2009
(51) Int. Cl.: G02C 3/00, G02C 5/14

(54) **BRANCHE POUR MONTURE DE LUNETTES À PIÈCE LATÉRALE ENJOLIVEUSE INTERCHANGEABLE**
ARM FÜR BRILLENGESTELL MIT AUSTAUSCHBAREM SEITENVERKLEIDUNGSTEIL
ARM FOR A SPECTACLE FRAME, HAVING AN INTERCHANGEABLE SIDE TRIM PART

(43) Date de publication de la demande: 04.07.2012
(73) Titulaire: BLI-DBP, 13011 Marseille (FR)
(72) Inventeur: BELLONE, Denis, F-13001 Marseille (FR)
(74) Mandataire: Domange, Maxime
(86) Numéro de dépôt international: PCT/FR2009/051631
(87) Numéro de publication internationale: WO 2011/023859

(56) Documents cités:
- WO-A-98/48314
- WO-A-2007/034082
- WO-A-2008/125743
- US-A- 5 652 637
- US-A1- 2004 207 804

## Description

### Arrière-plan de l'invention

La présente invention se rapporte au domaine général des branches pour monture de lunettes. Plus précisément, l'invention concerne les branches pour monture de lunettes pouvant recevoir des pièces latérales interchangeables pour changer l'esthétique de la paire de lunettes en fonction des envies de l'utilisateur.

De multiples dispositifs permettant de changer l'esthétique des branches des montures de lunettes existent. Par exemple, le document US2005/0259218 présente un dispositif de fixation particulier d'une pièce latérale faisant office de branche de lunettes sur le côté d'un support portant une paire de verres. Pour cela, le support comprend lui-même un élément de connexion pour la connexion de la branche sur le support. Avec ce dispositif, il est possible de changer facilement la pièce latérale et cela autorise une personnalisation de la paire de lunettes par l'utilisateur.

Cependant, on remarque que le dispositif présenté dans ce document présente un certain nombre d'inconvénients. En effet, dans ce dispositif, le support portant la paire de verres comprend lui-même deux éléments de connexion latéraux permettant de connecter les branches qui comprennent elles aussi l'ensemble des éléments pour le placement de la pièce latérale sur l'élément de connexion. En outre, comme les éléments de connexion latéraux décrits prennent en charge l'articulation de la pièce latérale par rapport au support, la structure de la pièce latérale en est encore complexifiée ainsi que celle de l'élément de connexion.

Cela résulte en une certaine complexité de l'élément de connexion et surtout en une certaine complexité du support portant la paire de verres. Il n'est, par exemple, pas possible de monter la branche présentée dans ce document sur n'importe quel support de verres de n'importe quelle monture de lunettes.

### Objet et résumé de l'invention

La présente invention a donc pour but principal de pallier les inconvénients tels que rencontrés avec les branches à pièces latérales interchangeables connues en proposant une branche pour monture de lunettes comprenant un élément de connexion destiné à être fixé sur un côté d'un support portant une paire de verres et une pièce latérale enjoliveuse longiligne, caractérisé en ce que :
l'élément de connexion inclut une pince formée avec une languette centrale longiligne et un cadre, cette pince fonctionnant en torsion entre deux configurations d'équilibre, une première configuration dans laquelle le cadre enchâsse la languette centrale et une seconde configuration dans laquelle la languette centrale est libérée par éloignement du cadre ;
la pièce latérale enjoliveuse interchangeable comprend, dans son épaisseur et le long de sa direction longiligne, un fourreau destiné à accueillir la languette centrale de l'élément de connexion lorsque, l'élément de connexion étant en seconde configuration, la pièce latérale enjoliveuse est montée sur l'élément de connexion, et comprend, sur au moins une des faces latérales de la pièce latérale enjoliveuse, une empreinte complémentaire du cadre dans laquelle le cadre vient se loger lorsque, une fois la languette centrale de la pince introduite dans le fourreau, il est mis dans la première configuration par torsion.

Une telle structure de branche est particulièrement simple dans la mesure où elle met en oeuvre un élément de connexion sous forme d'une pince fonctionnant en torsion à la manière bien connue des barrettes à cheveux du type « clip »,

L'invention exploite les capacités de pincement d'une telle structure comprenant une languette centrale et un cadre en proposant d'utiliser directement une telle structure de pince en collaboration avec une pièce latérale enjoliveuse spécialement conformée pour coopérer avec la forme de la pince.

On remarque également que, selon l'invention, seul l'élément de connexion est destiné à être fixé au support portant la paire de verre lors de l'installation de la branche selon l'invention sur ce support.

Il est donc possible de monter la branche selon l'invention sur n'importe quel support de n'importe quelle monture de lunettes dès lors que des moyens pour fixer une branche à demeure sont présents sur le support. Ainsi, une fois l'élément de connexion selon l'invention fixé à demeure sur le support, les pièces latérales seules sont interchangeables.

Il en résulte une structure particulièrement simple de la branche selon l'invention qui comprend deux éléments : l'élément de connexion constitué par la pince et fixé au support de la paire de verres et la pièce latérale enjoliveuse.

On remarque ici que l'on entend par « pièce latérale enjoliveuse longiligne », tous types de pièce latérale pour monture de lunettes connus. Typiquement cette pièce latérale enjoliveuse pourra être quasi strictement rectiligne, comme c'est souvent le cas pour les lunettes de sport, ou reprendre la forme des branches de lunettes avec retour derrière l'oreille ou encore toutes autres caractéristiques rencontrées dans le domaine. Elle pourra aussi, bien entendu, revêtir un matériau antidérapant etc.

Selon une caractéristique avantageuse de l'invention, l'empreinte est tracée sur la face latérale externe de la pièce latérale enjoliveuse et, dans la seconde configuration, le cadre se place vers l'extérieur de la monture par rapport à la languette.

Cette caractéristique permet que le cadre soit visible sur la face latérale externe de la pièce latérale enjoliveuse ce qui peut rajouter un élément esthétique agréable sur le côté de la monture de lunettes. En plus, cette caractéristique permet de dégager la pièce latérale enjoliveuse en tirant simplement sur celle-ci vers l'extérieur de la monture de lunettes.

Dans le cas où une articulation de la branche de lunettes est prévue par rapport au support portant la paire de verres, cela est particulièrement avantageux car une simple poussée de la pièce latérale enjoliveuse vers l'extérieur de la monture une fois les branches de la monture de lunettes ouvertes permet d'ouvrir la pince et de dégager la pièce latérale.

Dans le cas où l'élément de connexion est monté de manière telle que le cadre est disposé vers l'intérieur de la monture de lunettes et que l'empreinte est donc pratiquée sur la face interne de la pièce latérale, il sera nécessaire que la branche soit fixée au support portant la paire de verres sans articulation ou il sera nécessaire que l'articulation soit immobilisée pour dégager la pièce latérale enjoliveuse en poussant celle-ci vers l'intérieur de la monture comme pour rabattre la branche sur le support portant la paire de verres.

Selon un premier mode de réalisation de l'invention, l'élément de connexion est réalisé d'un bloc par découpage dans une plaque d'un contour en fourche portant, à sa base, une extension permettant la fixation au support portant la paire de verres et trois dents : deux montants constitutifs du cadre et la languette, les deux montants étant ensuite fixés l'un à l'autre à leur extrémité libre constituant ainsi le cadre mis sous contrainte.

Ce mode de réalisation permet que l'élément de connexion soit monobloc avec, d'un côté, les moyens pour être fixés sur le support portant la paire de verres et, de l'autre côté, la pince permettant la connexion de la pièce latérale enjoliveuse.

Les deux montants réunis à leur extrémité peuvent l'être par divers moyens dont une soudure lorsque, par exemple, du métal est utilisé pour la fabrication de l'élément de connexion. Un collage des deux montants à leur extrémité est également envisageable.

Selon un second mode de réalisation de l'invention, l'élément de connexion est réalisé d'un bloc par découpage dans une plaque d'un contour formant un cadre fermé présentant une base liée à deux montants latéraux joints entre eux à l'extrémité opposée à la base à partir de laquelle s'étendent, d'un côté, la languette et, de l'autre côté, une extension permettant la fixation au support portant la paire de verres, la base du cadre étant ensuite pliée de chaque coté de la languette et de l'extension de manière à rapprocher les deux montants du cadre au niveau de la base du cadre et à assurer ainsi la mise sous contrainte du cadre.

Ce mode de réalisation est très simple à mettre en oeuvre et évite la présence de soudure ou autre collage qui pourrait nuire à l'esthétique voire fragiliser le matériau à partir duquel le cadre est réalisé. Typiquement une soudure sur un inox fin peut entrainer des déformations peu souhaitables.

En outre, en réalisant le cadre sous contrainte grâce à un pliage, on décale le plan de la languette et celui des deux montants du cadre au niveau de la base du cadre. Ce décalage est fonctionnel dans le cadre de l'invention puisque la languette est destinée à être introduite dans un fourreau. Le pliage et le décalage qu'il engendre permet en effet de loger la nécessaire épaisseur de matière de la pièce latérale enjoliveuse qui entoure le fourreau.

Selon une caractéristique préférentielle de l'invention, le cadre présente un contour globalement triangulaire allongé dans la direction de la branche.

Bien que diverses formes de cadre puissent être utilisées selon l'invention, cette forme particulière autorise, outre l'aspect esthétique fuselé, la formation aisée d'un comportement en torsion adapté au fonctionnement de l'invention par réunion de deux montants latéraux rectilignes ainsi qu'explicité plus haut. Néanmoins des montants de forme diverses peuvent aussi être utilisés dès lors qu'une mise sous contrainte est réalisée ensuite.

Selon une caractéristique avantageuse, l'élément de connexion est réalisé en métal.

Un tel matériau permet effectivement l'obtention de propriétés en torsion et en élasticité adaptée pour la fabrication de la pince matérialisant l'élément de connexion selon l'invention.

En outre, ce matériau se découpe facilement et permet de fabriquer la pince par simple découpage dans une plaque métallique de la pince selon l'invention avant sa mise sous contrainte pour assurer les propriétés de torsion et de configurations d'équilibre telles que définies selon l'invention. Les deux montants du cadre sont alors avantageusement réunis par soudage entre eux au niveau de leur extrémité. Il est aussi possible d'envisager tous moyens de solidarisation de deux pièces à la disposition de l'homme du métier, par exemple un rivet etc. La réalisation par soudage présente néanmoins des avantages importants dans l'application visée : la compacité, l'absence d'éléments saillants qui pourraient se prendre dans les cheveux de l'utilisateur(trice) etc.

Avantageusement l'élément de connexion est fixé au support portant la paire de verres de manière articulée.

Cette caractéristique permet d'obtenir une articulation classique de la branche selon l'invention de manière tout à fait indépendante du fonctionnement de l'invention qui permet de changer la pièce latérale enjoliveuse tout en laissant l'élément de connexion fixé au support.

Le document WO-A-9848314 divulgue un élément de connection comprenant une pince longiligne enchâssée entre deux tiges.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- Les figures 1A et 1B présentent un élément de connexion selon un premier mode de réalisation de l'invention dans les deux configurations utiles selon l'invention ;
- La figure 2 représente une pièce latérale enjoliveuse selon l'invention ;
- La figure 3 montre l'engagement de la pièce latérale enjoliveuse sur l'élément de connexion avant verrouillage en position ;
- Les figures 4A et 4B montrent la branche de lunettes selon l'invention après verrouillage de l'élément de connexion ;
- Les figures 5 et 6 représentent un second mode de réalisation de l'élément de connexion selon l'invention.

### Description détaillée d'un mode de réalisation

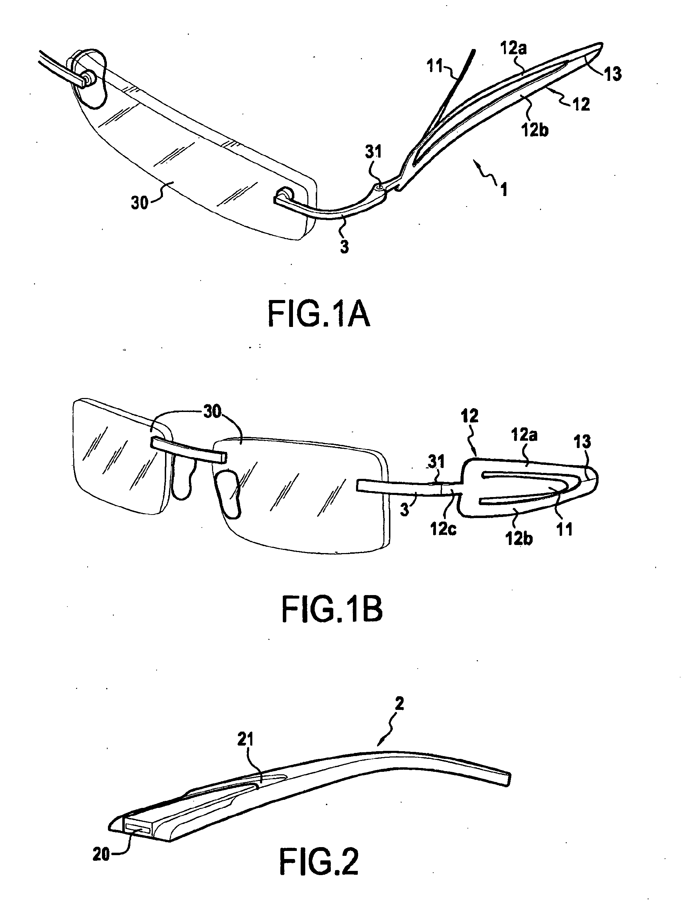

La figure 1A montre un support 3 portant une paire de verres 30 et un élément de connexion 1 selon l'invention fixé sur le côté du support 3. Dans l'exemple présenté ici, l'élément de connexion 1 est fixé au support 3 à l'aide d'une articulation 31.

Selon l'invention, l'élément de connexion inclut une pince comprenant une languette centrale 11 longiligne et un cadre 12.

Les figures 1a et 1b montrent cette pince dans les deux configurations d'équilibre fonctionnelles selon l'invention.

Dans la première configuration présentée sur la figure 1B, le cadre 12 enchâsse la languette centrale 11. Dans cette configuration, le cadre 12 est ramené vers l'intérieur de la monture de lunettes.

Dans la seconde configuration représentée sur la figure 1A, le cadre 12 est ramené vers l'extérieur de la monture de lunettes et la languette centrale 11 est alors libérée, c'est-à-dire éloignée du cadre 12.

La figure 2 représente une pièce latérale enjoliveuse 2 selon l'invention. Avantageusement cette pièce latérale enjoliveuse 2 porte tout élément esthétique susceptible d'intéresser un utilisateur.

Pour la mise en oeuvre de l'invention, cette pièce latérale enjoliveuse 2 comprend, dans son épaisseur et le long de sa direction longiligne, un fourreau 20 destiné à accueillir la languette centrale 11 de l'élément de connexion 1.

On note que l'engagement de la languette centrale 11 dans le fourreau 20 n'est possible que lorsque la pince constituant principalement l'élément de connexion 1 est dans sa seconde configuration telle que représentée sur la figure 1a.

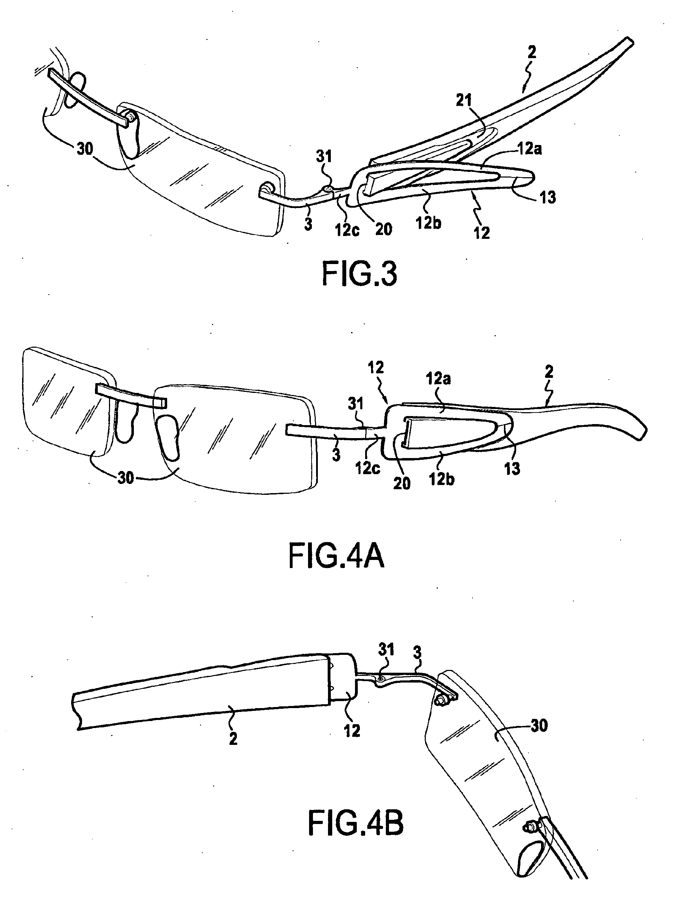

Dans ce cas, ainsi que représenté sur la figure 3, la pièce latérale enjoliveuse 2 peut être engagée sur la languette 11 de la pince en introduisant cette languette 11 dans le fourreau 20 de la pièce latérale 2.

La pièce latérale enjoliveuse interchangeable 2 comprend en outre une empreinte 21. Dans l'exemple présenté ici, l'empreinte 21 est pratiquée sur la face latérale externe de la pièce enjoliveuse 2.

On entend par « face latérale interne » et « face latérale externe » respectivement la face de la pièce latérale enjoliveuse 2 située et tournée vers l'intérieur de la monture de lunettes et la face de la pièce latérale enjoliveuse 2 située et tournée vers l'extérieur de celle-ci.

L'empreinte 21 est de forme complémentaire de la forme du cadre 12 afin que celui-ci puisse venir se loger dans cette empreinte 21 quand le cadre 12 est rabattu par torsion dans la première configuration de la pince. Cela est représenté sur les figures 4A et 4B.

On voit bien, sur la figure 4B, que le cadre est engagé dans l'empreinte 21 ce qui garantit son immobilisation par rapport à la pièce latérale enjoliveuse 2. On comprend ici que le rôle de l'empreinte 21 est de participer à l'immobilisation de la pièce latérale 2 par rapport à l'élément de connexion 1. Son contour peut éventuellement être seulement partiellement complémentaire de la forme du cadre 12 dès lors que le placement du cadre 12 dans l'empreinte 21 engendre une immobilisation en position de la pièce latérale enjoliveuse 2 par rapport à l'élément de connexion 1. En particulier le contour ou profil du clip, constitué par le cadre 12 et la languette 11, pourrait être plus ou moins épais que l'empreinte 21 dès lors que l'appui du cadre 12 sur l'empreinte 21 participe à l'immobilisation.

En outre, sur la figure 4B, on voit bien que la languette centrale 11 est engagée dans le fourreau 20 de la pièce latérale enjoliveuse 2.

Ainsi l'immobilisation de la pièce latérale enjoliveuse 2 par rapport à l'élément de connexion 1 est assurée, d'une part, par la languette 11 et le fourreau 20 et, d'autre part, par le cadre 12 et l'empreinte 21. Ces deux paires d'éléments se complètent pour assurer une très bonne immobilisation de la pièce latérale enjoliveuse 2 par rapport à l'élément de connexion 1 et donc verrouiller cette pièce latérale 2 en position par rapport à l'élément de connexion 1.

On note ici qu'éventuellement le fourreau 20 présentera un léger décrochement vers l'intérieur au niveau de son entrée qui résulte de la rencontre des plans du clip constitué par le cadre 12 et la languette 11 et ceux de l'empreinte 21 avec le fourreau 20. En effet, à la rencontre du cadre et de la languette, on approche une épaisseur nulle alors que ce n'est pas le cas entre le fourreau et l'empreinte. Ainsi pour des raisons de faisabilité industrielle, d'une part, la forme de l'empreinte se dégage de la forme du cadre 12 à l'approche de la zone de rencontre des plans de manière à éviter un effet de "zone-zéro" qui serai aléatoire et cassante et, d'autre part, l'entrée du fourreau peut être légèrement mise en saillie sur la face interne de la pièce latérale pour assurer la présence d'une épaisseur de matière suffisante autour de l'entrée du fourreau.

Dans l'exemple décrit ici, on constate que l'empreinte 21 est tracée sur la face latérale externe de la pièce latérale enjoliveuse 2 et que le cadre 12 se place vers l'extérieur de la monture par rapport à la languette 11 dans la seconde configuration.

Cela permet d'assurer que le dégagement de la pièce latérale enjoliveuse 2 se fasse par traction, ou poussée, de cette pièce latérale 2 vers l'extérieur de la monture de lunettes.

Dans le cas où l'empreinte 21 serait réalisée sur la face interne de la pièce latérale 2 et où le cadre 12 viendrait se placer vers l'intérieur de la monture de lunettes dans la seconde configuration, il serait préférable que l'élément de connexion 1 ne soit pas fixé au support 3 portant la paire de verres avec une articulation 31.

En effet, dans ce cas, le dégagement de la pièce latérale enjoliveuse 2 se ferait par traction, ou poussée, de la pièce latérale 2 vers l'intérieur de la monture de lunettes et cela serait malcommode en présence d'une articulation qu'il faudrait alors immobiliser.

Selon un premier mode de réalisation qui correspond à l'exemple présenté sur les figures précédentes, l'élément de connexion 1 est réalisé de manière monobloc par découpage d'un contour comprenant deux montants 12a et 12b du cadre 12 et la languette 11 ainsi que qu'une extension pour permettre la fixation sur le support 3 portant la paire de lunettes. Ce découpage se fait avantageusement dans une plaque métallique qui possède les propriétés élastiques requises pour réaliser la pince utile selon l'invention.

Le contour découpé présente avantageusement une forme de fourche présentant un « manche » matérialisant l'extension pour la fixation sur le support et trois dents : les deux montants 12a et 12b et la languette 11. Les deux montants 12a et 12b sont ensuite rassemblés à leur extrémité libre pour assurer la mise sous contrainte de la pince permettant l'existence des deux configurations d'équilibre de la pince selon l'invention.

Cela permet une réalisation particulièrement simple de l'invention en particulier lorsque la plaque dans laquelle le découpage a été effectué en métal.

Dans ce dernier cas, pour assurer le comportement en torsion entre les deux configurations d'équilibre du cadre 12, le cadre 12 selon l'invention est avantageusement réalisé à partir des deux montants 12a et 12b par soudage de ces deux montants 12a et 12b l'un à l'autre au niveau de leur extrémité libre le long d'une ligne 13.

Sur l'exemple représenté sur les figures 1 à 4, le cadre formé à partir de montants rectilignes a alors une forme globalement triangulaire allongée ce qui assure une esthétique agréable ainsi que les caractéristiques fonctionnelles correctes.

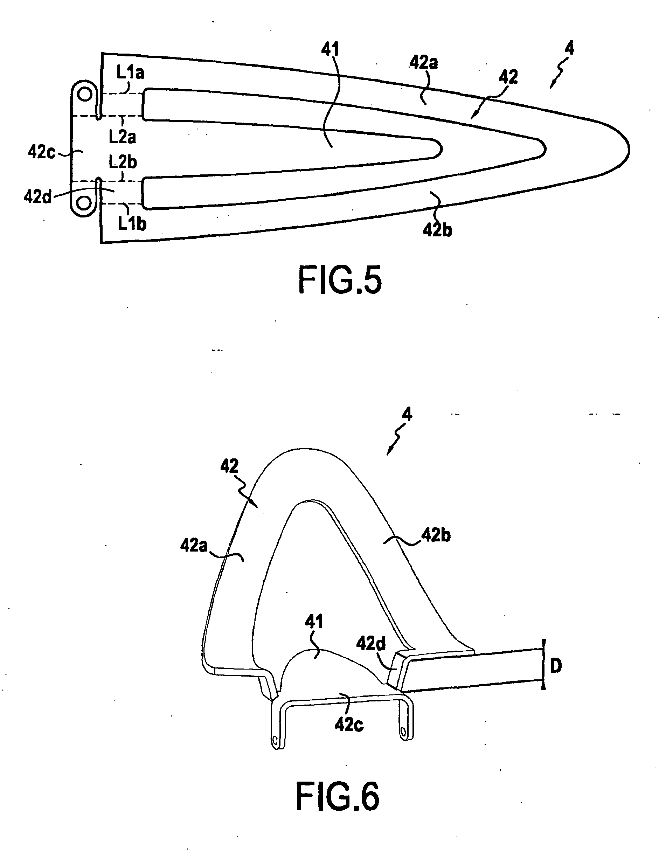

Les figures 5 et 6 montrent un second mode de réalisation très avantageux car évitant la nécessité de souder ou coller des extrémités de montants du cadre.

Il s'agit de réaliser un élément de connexion monobloc 4 par découpage dans une plaque d'un contour formant un cadre 42 fermé présentant une base 42d liée à deux montants latéraux 42a et 42b joints entre eux à l'extrémité opposée à la base 42d à partir de laquelle s'étendent, d'un côté, une languette 41 et, de l'autre côté, une extension 42c permettant la fixation au support 3 portant la paire de verres, la base 42d du cadre 42 étant ensuite pliée de chaque coté de la languette 41 et de l'extension 42c de manière à rapprocher les deux montants 42a et 42b du cadre 42 au niveau de la base 42d du cadre 42 et à assurer ainsi la mise sous contrainte du cadre 42.

Le pliage est réalisé le long de deux paires de lignes L1a,L2a et L1b,L2b à la manière illustrée sur la figure 6. On obtient alors un décalage D entre le plan de la languette 41 et le plan du cadre 42. Ce décalage sera avantageusement de l'épaisseur de la matière qui entoure le fourreau 20 de la pièce latérale enjoliveuse 2. On remarque ici que le pliage est fait de part et d'autre du plan de la languette 41 pour, d'une part, la mise sous contrainte du cadre 42, et, d'autre part, l'extension 42c permettant la fixation au support 3. Cela génère une utilisation optimale de l'espace et évite toute gène des éléments l'un par rapport à l'autre. En particulier, le repliement des branches selon l'invention sur le support 3 ne nécessitera pas d'aménagement particulier du support portant les verres.

On remarque que diverses mises en oeuvre peuvent être réalisées selon les principes de l'invention.

En particulier, le cintrage des montants 12a et 12b constituant le cadre 12 pourra être réalisé de diverses manières à la disposition de l'homme du métier, en particulier par d'autres éventuels types de pliage de la base plus complexes dès lors que cela permet, selon l'invention, l'existence des deux configurations d'équilibre de la pince. Les montants pourront également être de formes diverses, en zigzag(s), en arc(s) de cercle, en ondulations etc dès lors que ces montants sont mis sous contrainte pour permettre l'existence des deux configurations d'équilibre de la pince telle qu'incluse dans l'élément de connexion défini selon l'invention.

## Revendications

1. Branche pour monture de lunettes comprenant un élément de connexion (1,4) destiné à être fixé sur un côté d'un support (3) portant une paire de verres (30) et une pièce latérale enjoliveuse longiligne (2) interchangeable, **caractérisé en ce que** :
l'élément de connexion (1,4) inclut une pince formée avec une languette centrale (11,41) longiligne et d'un cadre (12,42), cette pince fonctionnant en torsion entre deux configurations d'équilibre, une première configuration dans laquelle le cadre (12,42) enchâsse la languette centrale (11,41) et une seconde configuration dans laquelle la languette centrale (11,41) est libérée par éloignement du cadre (12,42) ;
la pièce latérale enjoliveuse (2) interchangeable comprend, dans son épaisseur et le long de sa direction longiligne, un fourreau (20) destiné à accueillir la languette centrale (11,41) de l'élément de connexion (1,4) lorsque, l'élément de connexion (1,4) étant en seconde configuration, la pièce latérale enjoliveuse (2) est montée sur l'élément de connexion (1,4), et comprend, sur au moins une des faces latérales de la pièce latérale enjoliveuse (2), une empreinte (21) complémentaire du cadre (12,42) dans laquelle le cadre (12,42) vient se loger lorsque, une fois la languette centrale (11,41) de la pince introduite dans le fourreau (20), il est mis dans la première configuration par torsion.

2. Branche pour monture de lunettes selon la revendication 1, **caractérisé en ce que** l'empreinte (21) est tracée sur la face latérale externe de la pièce latérale enjoliveuse (2) et **en ce que**, dans la seconde configuration, le cadre (12,42) se place vers l'extérieur de la monture par rapport à la languette (11,41).

3. Branche pour monture de lunettes selon l'une des revendications 1 et 2, **caractérisé en ce que** l'élément de connexion (1) est réalisé d'un bloc par découpage dans une plaque d'un contour en fourche portant, à sa base, une extension (12c) permettant la fixation au support (3) portant la paire de verres (30) et trois dents : deux montants (12a, 12b) constitutifs du cadre (12) et la languette (11), les deux montants (12a, 12b) étant ensuite fixés l'un à l'autre à leur extrémité libre (13) constituant ainsi le cadre (12) mis sous contrainte.

4. Branche pour monture de lunettes selon l'une des revendications 1 et 2, **caractérisée en ce que** l'élément de connexion (4) est réalisé d'un bloc par découpage dans une plaque d'un contour formant un cadre (42) fermé présentant une base (42d) liée à deux montants latéraux (42a,42b) joints entre eux à l'extrémité opposée à la base (42d) à partir de laquelle s'étendent, d'un côté, la languette (41) et, de l'autre côté, une extension (42c) permettant la fixation au support (3) portant la paire de verres, la base du cadre (42) étant ensuite pliée de chaque coté de la languette (41) et de l'extension de manière à rapprocher les deux montants (42a,42b) du cadre (42) au niveau de la base (42d) du cadre (42) et à assurer ainsi la mise sous contrainte du cadre (42).

5. Branche pour monture de lunettes selon l'une des revendications précédentes, **caractérisé en ce que** le cadre (12,42) présente un contour globalement triangulaire allongé dans la direction de la branche.

6. Branche pour monture de lunettes selon l'une des revendications précédentes, **caractérisé en ce que** l'élément de connexion (1,4) est réalisé en métal.

7. Branche pour monture de lunettes selon l'une des revendications précédentes, **caractérisé en ce que** l'élément de connexion (1,4) est fixé au support (3) portant la paire de verres (30) de manière articulée.

8. Elément de connexion (1,4) destiné à être fixé sur un côté d'un support (3) portant une paire de verres (30) pour le montage d'une pièce latérale enjoliveuse (2) interchangeable au sein d'une branche pour monture de lunettes, **caractérisé en ce que** cet élément de connexion inclut une pince formée avec une languette centrale (11,41) longiligne et d'un cadre (12,42), cette pince fonctionnant en torsion entre deux configurations d'équilibre, une première configuration dans laquelle le cadre (12,42) enchâsse la languette centrale (11,41) et une seconde configuration dans laquelle la languette centrale (11,41) est libérée par éloignement du cadre (12,42).

9. Pièce latérale enjoliveuse (2) interchangeable destinée à être montée sur un élément de connexion selon la revendication 8, **caractérisé en ce que** cette pièce latérale enjoliveuse comprend, dans son épaisseur et le long de sa direction longiligne, un fourreau (20) destiné à accueillir la languette centrale (11,41) de l'élément de connexion (1,4) lorsque, l'élément de connexion (1,4) étant en seconde configuration, la pièce latérale enjoliveuse (2) est montée sur l'élément de connexion (1,4), et comprend, sur au moins une des faces latérales de la pièce latérale enjoliveuse (2), une empreinte (21) complémentaire du cadre (12,42) dans laquelle le cadre (12,42) vient se loger lorsque, une fois la languette centrale (11,41) de la pince introduite dans le fourreau (20), il est mis dans la première configuration par torsion.

## Patentansprüche

1. Bügel für eine Brillenfassung, umfassend ein Verbindungselement (1, 4), das dazu bestimmt ist, an einer Seite eines Trägers (3), der ein Gläserpaar (30) trägt, befestigt zu werden, und ein auswechselbares langgestrecktes Zierseitenteil (2), **dadurch gekennzeichnet, dass**:
das Verbindungselement (1, 4) eine mit einer langgestreckten mittleren Zunge (11, 41) und von einem Rahmen (12, 42) gebildete Klemme einschließt, wobei diese Klemme zwischen zwei Gleichgewichtsausführungen, einer ersten Ausführung, in der der Rahmen (12, 42) die mittlere Zunge (11, 41) einfasst, und einer zweiten Ausführung, in der die mittlere Zunge (11, 41) durch Entfernen vom Rahmen (12, 42) freigegeben ist, durch Torsion funktioniert;
das auswechselbare Zierseitenteil (2) in seiner Dicke und entlang seiner langgestreckten Richtung eine Buchse (20) umfasst, die dazu bestimmt ist, die mittlere Zunge (11, 41) des Verbindungselements (1, 4) aufzunehmen, wenn -wenn sich das Verbindungselement (1, 4) in der zweiten Ausführung befindet - das Zierseitenteil (2) an dem Verbindungselement (1, 4) angebracht ist, sowie an wenigstens einer der Seitenflächen des Zierseitenteils (2) eine zu dem Rahmen (12, 42) komplementäre Vertiefung (21) umfasst, in welcher der Rahmen (12, 42) aufgenommen wird, wenn er - sobald die mittlere Zunge (11, 41) der Klemme in die Buchse (20) eingeführt ist - durch Torsion in die erste Ausführung gebracht ist.

2. Bügel für eine Brillenfassung nach Anspruch 1, **dadurch gekennzeichnet, dass** die Vertiefung (21) auf der äußeren Seitenfläche des Zierseitenteils (2) ausgebildet ist und dass der Rahmen (12, 42) sich in der zweiten Ausführung bezogen auf die Zunge (11, 41) zu Außenseite der Fassung hin platziert.

3. Bügel für eine Brillenfassung nach einem der Ansprüche 1 und 2, **dadurch gekennzeichnet, dass** das Verbindungselement (1) dadurch einstückig ausgebildet ist, dass aus einer Platte eine gabelförmige Kontur ausgeschnitten wird, die an ihrer Basis eine Erweiterung (12c), welche die Befestigung an dem das Gläserpaar (30) tragenden Träger (3) ermöglicht, sowie drei Zinken, zwei den Rahmen (12) bildende Streben (12a, 12b) und die Zunge (11), trägt, wobei die beiden Streben (12a, 12b) anschließend an ihrem freien Ende (13) aneinander befestigt werden, wodurch der unter mechanische Spannung gesetzte Rahmen (12) gebildet wird.

4. Bügel für eine Brillenfassung nach einem der Ansprüche 1 und 2, **dadurch gekennzeichnet, dass** das Verbindungselement (4) dadurch einstückig ausgebildet ist, dass aus einer Platte eine Kontur ausgeschnitten wird, die einen geschlossenen Rahmen (42) bildet, welcher eine Basis (42d) aufweist, die mit zwei Seitenstreben (42a, 42b) verbunden ist, die an ihrem Ende, das der Basis (42d) gegenüberliegt, von der ausgehend sich einerseits die Zunge (41) und andererseits eine Erweiterung (42c), welche die Befestigung an dem das Gläserpaar tragenden Träger (3) ermöglicht, erstreckt, untereinander verbunden sind, wobei die Basis des Rahmens (42) anschließend auf jeder Seite der Zunge (41) und der Erweiterung gebogen wird, um die beiden Streben (42a, 42b) des Rahmens (42) im Bereich der Basis (42d) des Rahmens (42) zu nähern und so das mechanische Unterspannungsetzen des Rahmens (42) sicherzustellen.

5. Bügel für eine Brillenfassung nach einem der vorhergehenden Ansprüche, **dadurch gekennzeichnet, dass** der Rahmen (12, 42) eine im Ganzen dreieckige, in Richtung des Bügels langgestreckte Kontur aufweist.

6. Bügel für eine Brillenfassung nach einem der vorhergehenden Ansprüche, **dadurch gekennzeichnet, dass** das Verbindungselement (1, 4) aus Metall gefertigt ist.

7. Bügel für eine Brillenfassung nach einem der vorhergehenden Ansprüche, **dadurch gekennzeichnet, dass** das Verbindungselement (1, 4) an dem das Gläserpaar (30) tragenden Träger (3) gelenkig befestigt ist.

8. Verbindungselement (1, 4), das dazu bestimmt ist, an einer Seite eines ein Gläserpaar (30) tragenden Trägers (3) für das Anbringen eines auswechselbaren Zierseitenteils (2) innerhalb eines Bügels für eine Brillenfassung befestigt zu werden, **dadurch gekennzeichnet, dass** dieses Verbindungselement eine mit einer langgestreckten mittleren Zunge (11, 41) und von einem Rahmen (12, 42) gebildete Klemme einschließt, wobei diese Klemme zwischen zwei Gleichgewichtsausführungen, einer ersten Ausführung, in der der Rahmen (12, 42) die mittlere Zunge (11, 41) einfasst, und einer zweiten Ausführung, in der die mittlere Zunge (11, 41) durch Entfernen vom Rahmen (12, 42) freigegeben ist, durch Torsion funktioniert.

9. Auswechselbares Zierseitenteil (2), das dazu bestimmt ist, an einem Verbindungselement nach Anspruch 8 angebracht zu werden, **dadurch gekennzeichnet, dass** dieses Zierseitenteil in seiner Dicke und entlang seiner langgestreckten Richtung eine Buchse (20) umfasst, die dazu bestimmt ist, die mittlere Zunge (11, 41) des Verbindungselements (1, 4) aufzunehmen, wenn -wenn sich das Verbindungselement (1, 4) in der zweiten Ausführung befindet - das Zierseitenteil (2) an dem Verbindungselement (1, 4) angebracht ist, sowie an wenigstens einer der Seitenflächen des Zierseitenteils (2) eine zu dem Rahmen (12, 42) komplementäre Vertiefung (21) umfasst, in welcher der Rahmen (12, 42) aufgenommen wird, wenn er - sobald die mittlere Zunge (11, 41) der Klemme in die Buchse (20) eingeführt ist - durch Torsion in die erste Ausführung gebracht ist.

## Claims

1. An eyeglass frame temple comprising a connection element (1, 4) for fastening on one side of a support (3) carrying a pair of lenses (30) and an interchangeable elongate trim sidepiece (2), the temple being **characterized in that**:
the connection element (1, 4) includes a clip formed with an elongate central tongue (11, 41) and a loop (12, 42), the clip functioning in twisting between two equilibrium configurations, a first configuration in which the loop (12, 42) encompasses the central tongue (11, 41), and a second configuration in which the central tongue (11, 41) is released by the loop (12, 42) being moved away; and
the interchangeable trim sidepiece (2) includes, in its thickness and along its long direction, a sheath (20) for receiving the central tongue (11, 41) of the connection element (1, 4) when, with the connection element (1, 4) in its second configuration, the trim sidepiece (2) is mounted on the connection element (1, 4), and includes, in at least one of the side faces of the trim sidepiece (2), an indentation (21) complementary to the loop (12, 42) and in which the loop (12, 42) is received when it is put into its first configuration by twisting, once the central tongue (11, 41) of the clip has been inserted in the sheath (20).

2. An eyeglass frame temple according to claim 1, **characterized in that** the indentation (21) is formed in the outer side face of the trim sidepiece (2), and **in that**, in the second configuration, the loop (12, 42) is placed on the outside of the frame relative to the tongue (11, 41).

3. An eyeglass frame temple according to claim 1 or claim 2, **characterized in that** the connection element (1) is made as a single piece by being cut out from a plate having a fork-shaped outline and including at its base both an extension (12c) for fastening to the support (3) carrying the pair of lenses (30), and also three teeth: two strips (12a, 12b) constituting the loop (12); and the tongue (11); the two strips (12a, 12b) then being fastened together at their free ends (13), thereby constituting the loop (12) put under stress.

4. An eyeglass frame temple according to claim 1 or claim 2, wherein the connection element (4) being made as a single piece by being cut out from a plate having an outline forming a closed loop (42) presenting a base (42d) connected to two side strips (42a, 42b) that are joined together at their ends remote from the base (42d) from which there extend, on one side, the tongue (41), and on the other side, an extension (42c) for fastening to the support (3) carrying the pair of lenses, the base of the loop (42) subsequently being folded on either side of the tongue (41) and of the extension so as to bring the two strips (42a, 42b) of the loop (42) closer to the base (42d) of the loop (42) and thus enable the loop (42) to be put under stress.

5. An eyeglass frame temple according to any preceding claim, **characterized in that** the loop (12, 42) presents a generally triangular outline that is elongate in the long direction of the temple.

6. An eyeglass frame temple according to any preceding claim, **characterized in that** the connection element (1, 4) is made of metal.

7. An eyeglass frame temple according to any preceding claim, **characterized in that** the connection element (1, 4) is fastened in hinged manner to the support (3) carrying the pair of lenses (30).

8. A connection element (1, 4) for fastening to one side of a support (3) carrying a pair of lenses (30) for mounting an interchangeable trim sidepiece (2) within an eyeglass frame temple, the connection element being **characterized in that** it includes a clip formed with an elongate central tongue (11, 41) and a loop (12, 42), the clip operating in twisting between two equilibrium configurations, a first configuration in which said loop (12, 42) encompasses the central tongue (11, 41), and a second configuration in which the central tongue (11, 41) is released by the loop (12, 42) being moved away.

9. An interchangeable trim sidepiece (2) for mounting on a connection element according to claim 8, the trim sidepiece being **characterized in that** it includes, in its thickness and along its long direction, a sheath (20) for receiving the central tongue (11, 41) of the connection element (1, 4) when, with the connection element (1, 4) in its second configuration, the trim sidepiece (2) is mounted on the connection element (1, 4), and includes, in at least one of the side faces of the trim sidepiece (2), an indentation (21) complementary to the loop (12, 42) and in which the loop (12, 42) is received when it is put into its first configuration by twisting, once the central tongue (11, 42) of the clip has been inserted into the sheath (20).
